# EUROPÄISCHE PATENTSCHRIFT

(11) **EP 0 449 103 B1**
(45) Veröffentlichungstag und Bekanntmachung des Hinweises auf die Patenterteilung: **15.02.1995**
(21) Anmeldenummer: 91104392.5
(22) Anmeldetag: 21.03.1991
(51) Int. Cl.: E02F 3/627, A01B 59/048, A01D 87/00

(54) **Befestigungsvorrichtung eines Laders an einem Schlepper**
Device for coupling a front end loader attachment to a tractor
Dispositif d'attelage pour chargeur frontal de tracteur

(30) Priorität: 30.03.1990 US 502071
(43) Veröffentlichungstag der Anmeldung: 02.10.1991
(73) Patentinhaber: DEERE & COMPANY, Moline, Illinois 61265 (US)
(72) Erfinder: Kaczmarczyk, Edward Ted, Welland, Ontario L3B 5N2 (CA); Rae, Rory, Port Colborne, Ontario L3K 2V2 (CA); Kizlyk, Mervin Peter, Welland, Ontario L3B 5N2 (CA)
(74) Vertreter: Feldmann, Bernhard

(56) Entgegenhaltungen:
- DE-A- 3 229 947
- DE-A- 3 831 212
- US-A- 4 984 958

## Beschreibung

Die Erfindung betrifft eine Befestigungsvorrichtung zur Montage des unteren Endes eines aufrechten Ladermastständers an einem Arbeitsfahrzeug, insbesondere einem Schlepper, gemäß dem Oberbegriff des Patentanspruchs 1.

Die vorliegende Erfindung bezieht sich allgemein auf Lader, welche an das vordere Ende von Schleppern montierbar sind und insbesondere auf Befestigungseinrichtungen für Lader, die ein schnelles Befestigen und Lösen erlauben und eine feste, spielfreie Verbindung zwischen Lader und Schlepper sicherstellen.

Es sind eine Reihe von Befestigungseinrichtungen für Lader bekannt geworden, die einer Bedienungsperson eine einfache Anbringung des Laders an einem Schlepper ermöglichen. Der Lader läßt sich hierbei auch schnell wieder lösen, um den Schlepper für andere Verwendungen bereitzustellen. Bei den meisten dieser Befestigungseinrichtungen sind für die Montage und Demontage Werkzeuge, Unterlagekeile oder Einstellmittel erforderlich, um während der Montage die Eingriffsbereiche zwischen Lader und Schlepper genau auszurichten und einen spielfreien Sitz zu ermöglichen. Die Hilfsmittel sollen das Einsetzen eines Verriegelungsbolzens erleichtern und einer Lockerheit sowie hieraus resultierenden Vibrationen vorbeugen. Eine enge, feste Anpassung ist insbesondere bei kleinen Schleppern erforderlich, bei denen keine weit auseinander liegenden Befestigungspunkte für den Lader gegeben sind, so daß eine Lockerheit der Befestigung sich verstärkend auf das am Lader befestigte Zusatzgerät auswirkt. Ein Beispiel für eine derartige Befestigungseinrichtung geht aus der US-PS 4,247,242 hervor, bei der ein Gewindebauelement vorgesehen ist, um einen Befestigungsfuß des Laders in einem am Schlepper montierten Befestigungsschuh, der als Tragstütze mit abgeschrägten Oberflächen ausgebildet ist, festzuklemmen. Die Bereitstellung derartiger Nachstellmittel erhöht die Kosten sowie die Zeit, die für die Befestigung und das Lösen des Laders erforderlich ist.

Einige der bekannten Klemmanordnungen können während des Betriebs unerwünschte Kräfte oder Verschiebungen des Laderrahmens hervorrufen. Ferner erfordern die Tragstützen des Schleppers und die daran angepaßten Mastteile des Laders, welche über Bolzen, Unterlagen oder Ausgleichselemente miteinander in Verbindung stehen, eine hohe Fertigungstoleranz, wodurch ihre Herstellungskosten steigen. Darüberhinaus besteht die Gefahr, daß die Befestigungsmittel unter rauhen Einsatzbedingungen, wie sie beim Laderbetrieb üblich sind, funktionsunwirksam werden. Werden bei Befestigungseinrichtungen Verriegelungsbolzen verwendet, ohne daß der feste Sitz durch Einstellmittel herstellbar ist, so ist das Einsetzen und Herausnehmen der Bolzen schwierig und erfordert hohe Kräfte.

Durch die DE-A-38 31 212 ist eine Befestigung eines Anbaugerätes an einem Arbeitsfahrzeug der eingangs genannten Art bekannt geworden. Hier ist eine fahrzeugseitige Konsole vorgesehen, die als eine erste Abstützstelle einen Lagerbolzen zur Aufnahme eines nach hinten offenen Kupplungsmauls des Mastständers trägt. Als zweite Abstützstelle besitzt die Konsole ebene Anschlagflächen, die eine Neigung gegenüber der Verbindungsgeraden der beiden Abstützstellen der Konsole aufweisen und mit einem entsprechend ausgebildeten an dem Mastständer befestigten Anschlag zusammenwirken. Neben der Neigung in der Längsrichtung des Arbeitsfahrzeuges besitzen die Anschlagflächen eine Neigung quer zur Fahrtrichtung, um beim Anbau des Frontladers die richtige seitliche Position des Mastständers zu der Konsole sicherzustellen. Die Lage der Anschlagflächen läßt sich durch zwei unter einem rechten Winkel zueinander angeordnete Feststellschrauben stufenlos einstellen. Der mechanische Aufbau dieser Befestigung ist immer noch relativ aufwendig.

Die DE-A-32 29 947 beschreibt eine Befestigungsvorrichtung zur Befestigung eines Laders an einem Schlepper, die beidseits des Schleppers angeordnet ist und jeweils ein erstes am Schlepper befestigtes Anbauteilstück und ein zweites am Lader befestigtes Anbauteilstück enthält. Jedes am Lader befestigte Anbauteilstück weist zwei zueinander beabstandete Lagerzapfen auf, die jeweils ein Kupplungsmaul aufnehmen, das am schlepperseitigen Anbauteilstück befestigt ist. Eines der beiden Kupplungsmäuler bildet dabei eine Einschuböffnung, und das andere Kupplungsmaul einen durch Elementverschwenkung mit dem zugehörigen Lagerzapfen kuppelbaren Haken. Im Hakenbereich ist eine Verriegelungsvorrichtung vorgesehen, die eine verkeilende Wirkung ausübt, um eine dauerhafte Verriegelung zu erreichen. Auch diese Lösung ist mechanisch aufwendig.

Die mit der Erfindung zu lösende Aufgabe wird darin gesehen, eine Befestigungseinrichtung zur Befestigung eines Laders an einem Arbeitsfahrzeug der eingangs genannten Art anzugeben, durch die die genannten Nachteile und Schwierigkeiten überwunden werden können. Die Befestigungseinrichtung soll eine einfache Handhabung und eine feste Verbindung zwischen Lader und Schlepper ermöglichen, ohne daß Werkzeuge, Zwischenlagen, Keile oder besondere Einstellmittel, durch die sich die Kosten und die Komplexität des Laders erhöhen würden, erforderlich sind. An die Herstellung der Befestigungseinrichtung sollen relativ geringe Toleranzanforderungen gestellt werden müssen. Die Befestigungsvorrichtung soll sich insbesondere bei Ladern vorteilhaft anwenden lassen, die keine weit auseinander liegenden Befestigungspunkte aufweisen.

Die Befestigungseinrichtung soll ferner eine formschlüssige Festlegung des Ladermastständers an den Befestigungsmitteln des Schleppers ermöglichen, bei der der Lader einfach durch Bolzen oder Stifte am Schlepper befestigbar ist, wobei jedoch sich auf den Verbindungsbereich auswirkende unerwünschte Kräfte vermindert oder vermieden werden. Die Befestigungseinrichtung soll einen vorteilhaften Einsatz der Laderzylinder ermöglichen, um die die Bolzen aufnehmenden Öffnungen zueinander auszurichten, wodurch sich die Verriegelungsvorrichtung beim Befestigung und Lösen des Laders leicht einsetzen und herausnehmen läßt.

Die Aufgabe wird erfindungsgemäß für eine Befestigungsvorrichtung der gattungsgemäßen Art durch die kennzeichnenden Merkmale des Patentanspruchs 1 gelöst.

Bei montiertem Lader liegt das Auflageteil fest an der Fangtasche, die als Anschlag dient, an. Der Durchmesser des Befestigungsbolzens ist etwa gleich groß wie die Durchmesser der Ausnehmungen des Mastständerendes und des Anbaurahmens.

Bei der Montage der Laderständer an einem Arbeitsfahrzeug bedient man sich der am Lader vorhandenen Zylinder, um den Mastständer um den Drehpunkt zu verschwenken, der durch den vom hohlkehlförmigen Teil aufgenommenen Querbolzen gebildet wird. Ferner wird durch Betätigung der Zylinder unter Ausnutzung des Fahrzeuggewichtes das Auflageteil des Mastständers auf die hierfür vorgesehene Fangtasche des Anbaurahmens gepreßt, wodurch die Ausnehmungen des Mastständers und des Anbaurahmens in fluchtende Ausrichtung gebracht werden und der Befestigungsbolzen mühelos eingesetzt werden kann.

Dieses Montage verfahren ermöglicht damit eine einfache Montage des Laders an dem Arbeitsfahrzeug, ohne daß die Verwendung von besonderem Werkzeug erforderlich ist.

Die Befestigungseinrichtung gemäß der vorliegenden Erfindung enthält ein Paar Anbaurahmen, die an den beiden gegenüberliegenden Seiten des Schlepperrahmens befestigt und für die Aufnahme der unteren Enden der aufrechten Mastständer des Laders ausgelegt sind. Jeder der Anbaurahmen enthält einen quer ausgerichteten Bolzen, der der Aufnahme eines nach vorne offenen Vorderbereiches des Mastständers dient. Der hintere Bereich jedes Anbaurahmens öffnet sich nach oben, um den hinteren Bereich des Mastständerendes aufzunehmen, wenn der Mastständer um die Achse des Bolzens abwärts geschwenkt wird. In dem hinteren Bereich des Mastständerendes befinden sich hervorstehende, zur Aufnahme eines Bolzens geeignete Buchsen, die durch passende, nach oben offene Fangtaschen im hinteren Bereich des Anbaurahmens aufgenommen werden. Die Buchsen werden durch Betätigung der hydraulischen Auslegerzylinder bei auf dem Boden aufliegendem Zusatzgerät zwangsläufig in die Fangtaschen gedrückt. Der große mechanische Gewinn, der durch Verschwenken des Mastes um die vordere Stange mit Hilfe des Auslegerzylinders erreicht wird, gewährleistet eine zwangsweise Ausrichtung des Mastständerendes mit dem Anbaurahmen. Wenn die Buchsen nach unten ganz in die Sitzlage in den Fangtaschen gedrückt sind, werden Bohrungen in dem Anbaurahmen mit Buchsenbohrungen in eine fluchtende Lage ausgerichtet, so daß ein Verriegelungsbolzen leicht einsteckbar ist und den Mastständer am Schlepper festlegt. Es ergibt sich so eine eng anliegende Verbindung zwischen Mastständer und Anbaurahmen, ohne daß bei der Herstellung der betroffenen Teile hohe Fertigungstoleranzen eingehalten zu werden brauchen. Zwischenlagen, Keile, schraubbare Nachstellmittel oder andere zusätzliche Teile sind nicht erforderlich, um eine starke, enge Anpassung zu erhalten. Für den Anbau oder den Abbau des Laders sind keine Werkzeuge erforderlich. Die Fangtaschen sind so geformt, daß sie eine Zwangsführung für die Buchse darstellen und unerwünschte Kräfte und Verschiebungen am Mastständerende selbst unter schweren Belastungen beim Laderbetrieb vermeiden. Während des Abbaus des Laders werden die Buchsen wieder nach unten in die Fangtaschen gedrückt, so daß der Bolzen bei sehr geringem Kraftaufwand ohne Werkzeug entfernt werden kann. Da keine schraubbaren Einstellmittel, Zwischenlagen, Keile oder dergleichen erforderlich sind, kann sowohl der Anbau als auch der Abbau des Laders in vergleichsweise kurzer Zeit erfolgen.

Weitere vorteilhafte Ausgestaltungen und Weiterbildungen der Erfindung gehen aus den Unteransprüchen hervor.

Anhand der Zeichnung, die ein Ausführungsbeispiel der Erfindung zeigt, sollen die Erfindung sowie weitere Vorteile und vorteilhafte Weiterbildungen und Ausgestaltungen der Erfindung näher beschrieben und erläutert werden.

Es zeigt:
- Fig. 1: einen Schlepper mit Lader in perspektivischer Darstellung,
- Fig. 2: die Seitenansicht eines Schleppers mit einem sich in Parkstellung befindlichen Lader,
- Fig. 3: die Seitenansicht eines Schleppers mit Lader, der so aufgestellt ist, daß das untere Ende des Mastständers durch den am Schlepper befestigten Anbaurahmen aufgenommen werden kann,
- Fig. 4: eine ähnliche Darstellung wie Fig. 3, bei dem der Mastständer auf einen Anbaurahmen abgesenkt wurde,
- Fig. 5: eine ähnliche Darstellung wie Fig. 4, bei der jedoch der Mast und die Befestigung in eine Lage gedrückt sind, in der das Mastständerende zum Anbaurahmen derart ausgerichtet ist, daß der Befestigungsbolzen sich leicht einsetzen oder herausnehmen läßt,
- Fig. 6: eine Aufsicht des Anbaurahmens,
- Fig. 7: eine Seitenansicht des Anbaurahmens aus Fig. 6,
- Fig. 8: die vergrößerte Querschnittsdarstellung des Anbaurahmens im wesentlichen entlang der Linie 8 - 8 in Fig. 7,
- Fig. 9: die vergrößerte Seitenansicht des Mastständers des Laders gemäß einer der Fig. 1 bis 6,
- Fig. 10: eine Ansicht im wesentlichen entlang der Linie 10 - 10 in Fig. 9,
- Fig. 11: eine Schnittansicht des Anbaurahmens und des Mastständers in Fahrzeuglängsrichtung mit einem am Schlepper montierten Lader,
- Fig. 12: eine mit Fig. 8 vergleichbare Längschnittdarstellung bei der jedoch das untere Mastständerende in den Anbaurahmen eingesetzt ist, und
- Fig. 13: die vergrößerte Perspektivdarstellung des hinteren Bereiches des Anbaurahmens, aus der die Gestaltung der Fangtaschen hervorgeht.

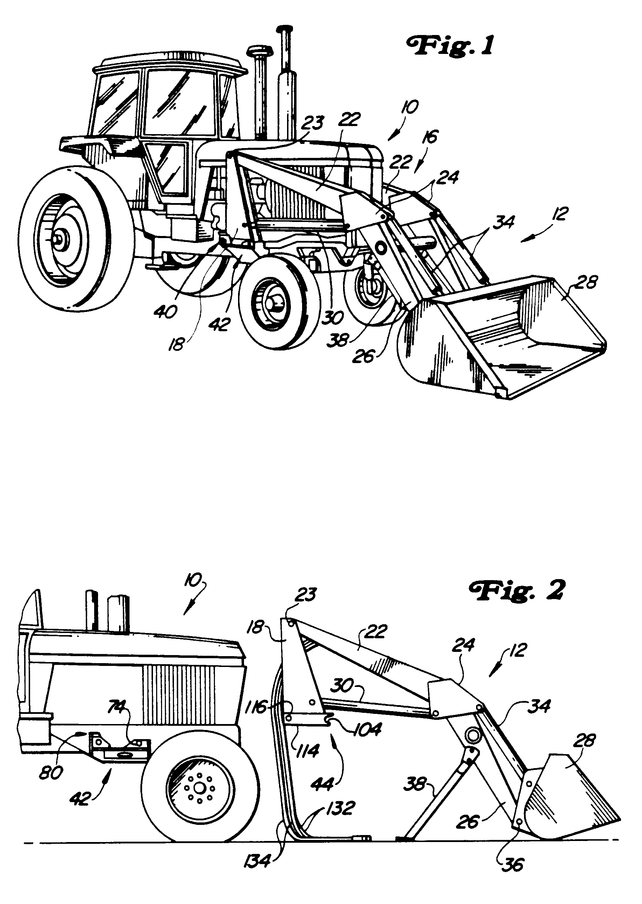

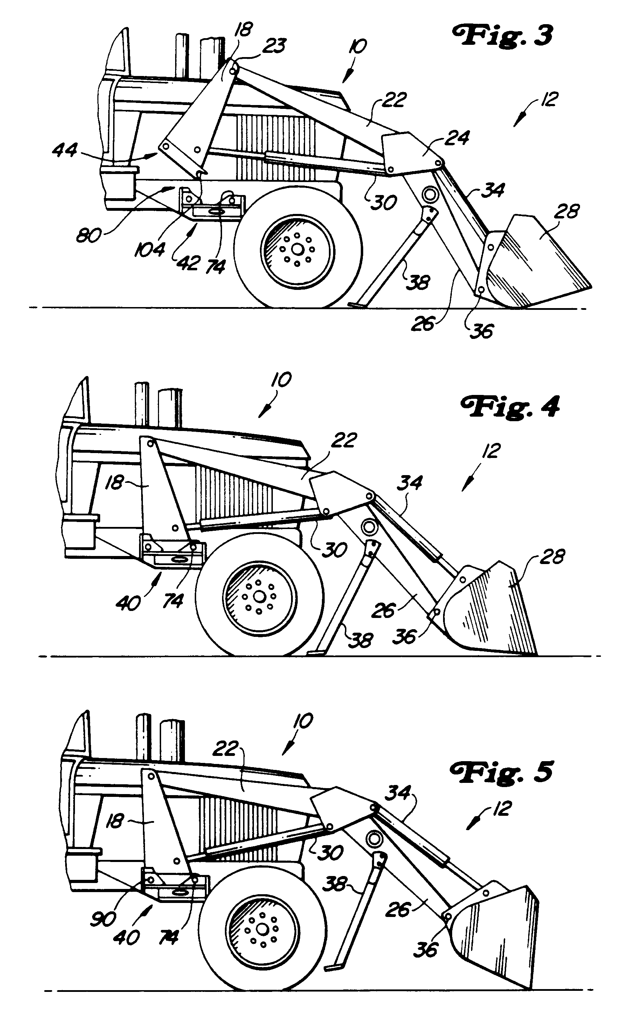

Aus Fig. 1 geht ein Schlepper 10 mit einem daran montierten Lader 12 hervor. Der Lader 12 enthält einen Mast 16, der gelenkig mit aufrechten Mastständern 18 verbunden ist und sich durch einen Auslegerzylinder 30 in üblicher Weise um eine Querachse hoch- und runterschwenken läßt. Der Mast 16 umfaßt ein Paar zueinander querbeabstandeter Auslegerarme 22, die an den Stellen 23 mit dem Mastständer 18 verbunden sind. Die Auslegerarme 22 erstrecken sich von den Mastständern 18 aus nach vorn zu den Kniegelenken 24. Die Auslegerarme 22 erstrecken sich von den Kniegelenken 24 aus schräg nach unten zu unteren, vorderen Befestigungsenden 26. An diesen Befestigungsenden 26 ist ein Zusatzgerät 28 befestigt. Zwischen den unteren Enden des Mastständers 18 und den Kniegelenken 24 sind Auslegerzylinder 30 befestigt, durch die die Auslegerarme 22 vertikal um die gelenkigen Stellen 23 verschwenkbar sind. Zwischen den Kniegelenken 24 und dem Zusatzgerät 28 sind Zylinder 34 befestigt, um das Zusatzgerät 28 um die Drehpunkte 36 in verschiedene Park- und Arbeitsstellungen zu verschwenken. Unter den Kniegelenken 24 sind an den Auslegerarmen 22 Abstellstützen 38 befestigt, die sich zwischen einer angehobenen Betriebsstellung (Fig. 1), in der die Stützen 38 sich an die Auslegerarme 22 anschmiegen, und einer Abstellposition (Fig. 2), in der die Stützen 38 nach hinten geklappt sind und einen Winkel mit den Auslegerarmen 22 einnehmen, verschwenken lassen. Sind die Abstellstützen 38 in ihrer Abstellposition festgelegt, so kann der nicht an dem Schlepper 10 befestigte Lader 12 frei stehen und wird lediglich durch die Abstellstützen 36 und das Zusatzgerät 28 getragen (Fig. 2 und 3).

Wie in Fig. 1 gezeigt, ist der Lader 12 ein Frontlader und das Zusatzgerät 28 eine Laderschaufel. Es versteht sich jedoch, daß die vorliegende Erfindung auch bei anderen Fahrzeugarten mit an Auslegern befestigbaren Zusatzgeräten angewendet werden kann.

Durch Seitenbefestigungen, die in Fig. 1 insgesamt mit dem Bezugszeichen 40 versehen sind, läßt sich der Lader 12 an dem Schlepper 10 an örtlich vorgegebenen Bereichen lösbar befestigen. Sie erleichtern die Befestigung und das Lösen des Laders 12. Die Seitenbefestigungen 40 enthalten an jeder Schlepperseite je einen Anbaurahmen 42 (Fig. 2), der als Schweißkonstruktion ausgebildet sein kann und an einem sich in Fahrzeuglängsrichtung erstreckenden Schlepperrahmen befestigt ist, und ein mit dem Anbaurahmen 42 zusammenpassendes unteres Mastständerende 44. Da die Seitenbefestigung 40 auf der linken Schlepperseite im wesentlichen ein Spiegelbild der Seitenbefestigung auf der rechten Schlepperseite ist, wird im folgenden lediglich die rechte Seitenbefestigung 40 näher beschrieben.

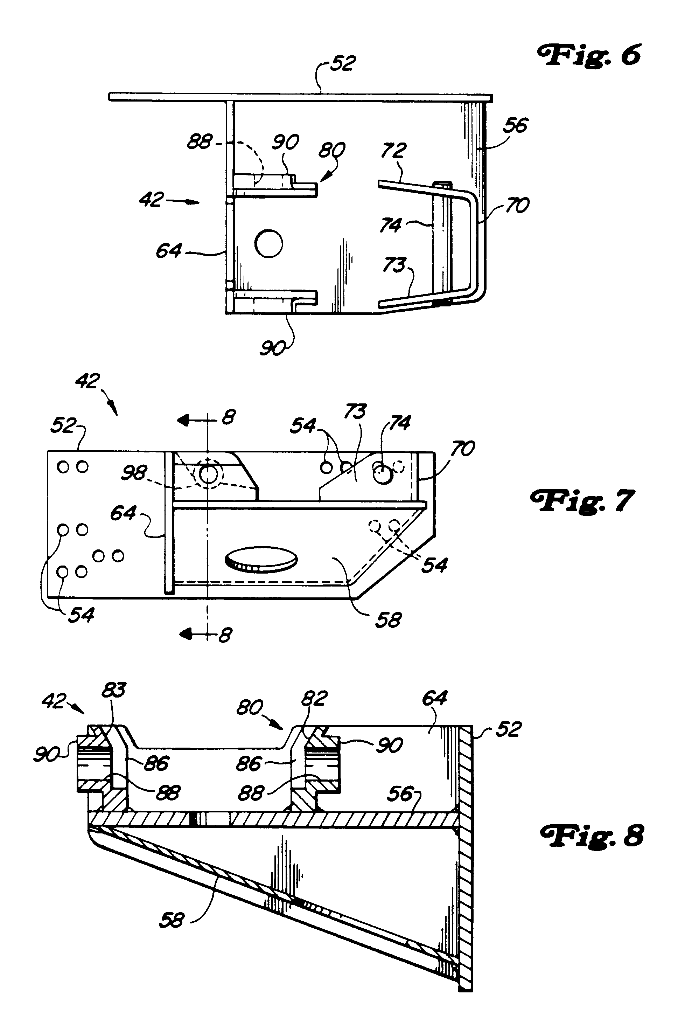

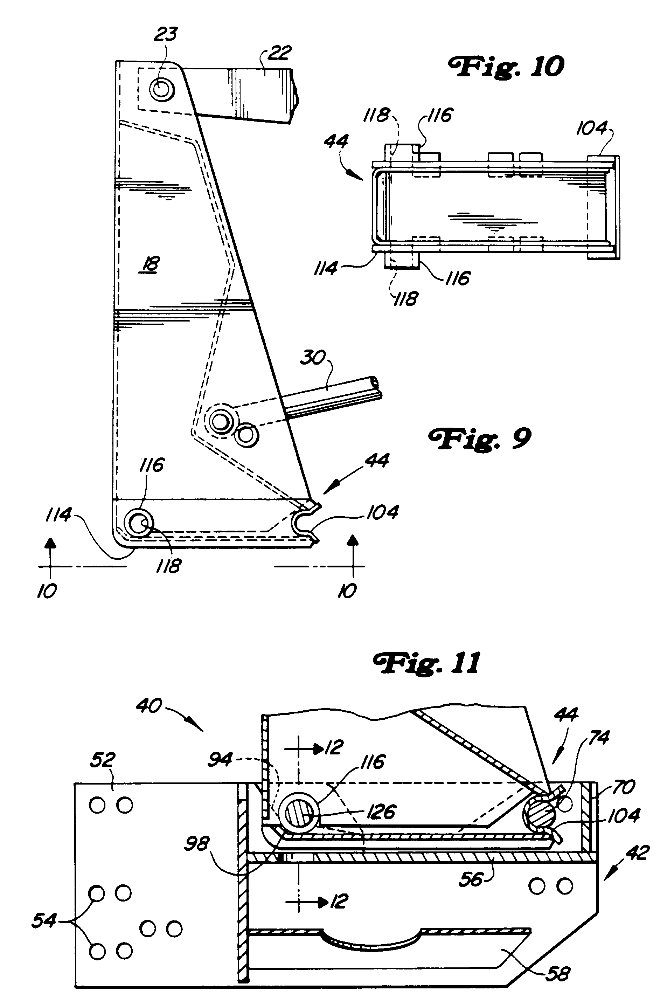

Der Anbau- oder Stützrahmen 42 gemäß Fig. 6 bis 8 und 11 bis 13 weist eine aufrecht ausgerichtete Befestigungsplatte 52 auf, die Öffnungen 54 zur starren Befestigung des Anbaurahmens 42 an einer Stelle der Schlepperrahmenseite unmittelbar hinter den Vorderrädern des Schleppers 10 enthält. Eine horizontale Grundplatte 56 ist mit der Befestigungsplatte 52 verschweißt und erstreckt sich seitlich nach außen. Eine diagonale Strebe 58 erstreckt sich vom unteren Ende der Befestigungsplatte 52 nach oben und außen und ist an der äußeren Kante der Grundplatte 56 an dieser befestigt. Eine Rückwand 64 ist mit den Platten 52 und 56 verschweißt und bildet mit diesen eine starke und steife Tragkonstruktion.

Mit der Grundplatte 56 des Anbaurahmens 42 ist ein nach hinten hin offenes U-förmiges Teil 70 verschweißt (Fig. 6, 7 und 11). Dieses Teil 70 enthält ein Paar nach hinten hin auseinanderlaufender Platten 72, 73, welche nach oben und hinten offen sind und zwischen sich einen sich quer erstreckenden über der Grundplatte 56 liegenden Bolzen oder Stab 74 tragen. Die Platten 72, 73 sind so dimensionalisiert und angeordnet, daß sie den vorderen Bereich des unteren Mastrahmenendes 44 aufnehmen und das Ende 44 während der Befestigung des Laders 12 in engem Kontakt mit dem Bolzen 74 führen.

Mit der Grundplatte 56 und der Rückwand 64 sind Haltevorrichtungen 80 mit maschinell hergestellten abgeschrägten Führungsschienen 82, 83 verschweißt, die während der Befestigung den rückwärtigen Bereich des unteren Mastständerendes 44 aufnehmen. Die beiden Führungsschienen 82, 83 sind im wesentlichen zueinander spiegelbildlich ausgebildet und umfassen eine aufrechte äußere Wand 84 und eine innere Führungsoberfläche 86. In der äußeren Wand 84 befindet sich eine Bohrung 88, die sich durch eine Buchse 90 erstreckt, welche ihrerseits mit der Außenseite der Wand 84 verschweißt ist. Die obersten Bereiche der Wände 84 laufen nach oben auseinander, wodurch das Einführen der unteren Mastständerenden 44 in die Befestigungsstellung erleichtert wird.

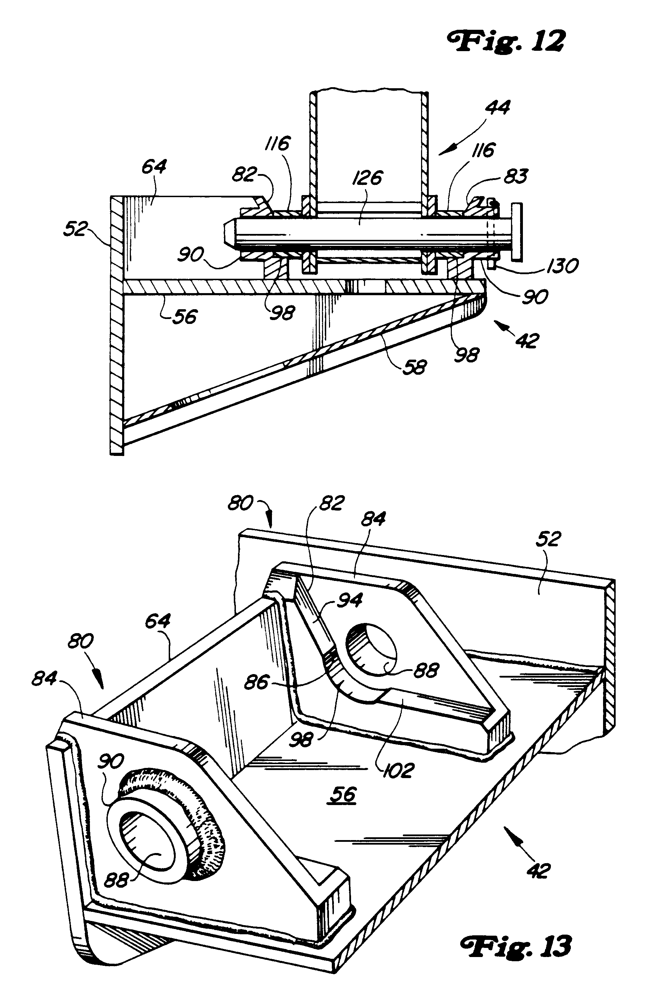

Jede der Führungsschienen 82, 83 enthält einen schrägen hinteren Bereich 94, welcher von der hinteren Wand 64 zur Öffnung 88 hin abgewinkelt ist und in eine abgerundete Fangtasche 98 mündet. Wie es am besten aus Fig. 13 ersichtlich ist, öffnet sich jede Fangtasche 98 nach oben und etwas nach vorn und bildet den am tiefsten liegenden Endpunkt der Führungsoberfläche 86. Die Fangtasche 98 ist kreisförmig ausgebildet und hat ihren Kreismittelpunkt im wesentlichen in der Achse der Bohrung 88. Die Führungsoberfläche 86 erstreckt sich bei 102 von der Fangtasche 98 aus nach vorn und liegt hier etwas oberhalb des am tiefsten liegenden Endpunktes der Fangtasche 98.

Das untere Mastständerende 44 enthält eine nach vorn offene Auskehlung 104 mit einem C-förmigen Querschnitt, welcher für eine Aufnahme durch den Bolzen 74 zwischen den Platten 72, 73 ausgelegt ist, und durch den sich eine Schwenklagerung des Laders 12 für das Montage- und Demontageverfahren ergibt. Die Auskehlung 104 erweitert sich nach außen in Vorwärtsrichtung, um eine Führungshilfe für das vordere Ende des unteren Mastständerendes 44 bei dessen Aufnahme durch den Bolzen 74 zu bilden. Die Auskehlung 104 wird nach vorn getrieben, um sich eng gegen den Bolzen 74 und zwischen die Platten 72, 73 anzuschmiegen, so daß sich für den vollständig montierten Lader ein fester Halt sowohl in Längs- als auch in Querrichtung ergibt.

Das untere Mastständerende 44 weist ferner einen hinteren Bereich 114 auf, der verstärkte Maststeckhülsen oder Ständerträger 116 trägt, die quer über die Seitenbegrenzungen des Mastständers 18 hinausragen. Die Breite des hinteren, bei den Maststeckhülsen 116 liegenden Bereiches des unteren Mastständerendes 44 ist in etwa gleich dem Abstand zwischen den nach innen gerichteten Oberflächen der Wände 84 der Haltevorrichtung 80. Der äußere Durchmesser jeder der Maststeckhülsen 116 ist gleich dem Durchmesser der entsprechenden Fangtasche 98. Die Maststeckhülsen 116 haben Bohrungen 118, deren Durchmesser gleich dem Durchmesser der Bohrungen 88 in den Buchsen 90 ist. Wenn die Maststeckhülsen 116 vollständig in die Fangtaschen 98 eingeführt sind, fluchten die Bohrungen 88 und 118 vollständig miteinander und erlauben ein leichtes Einsetzen und Herausnehmen eines Befestigungsbolzens 126. Die Führungsbereiche 94 drängen die unteren Mastständerenden 44 nach vorn, wenn die Maststeckhülsen 116 nach unten in die Fangtaschen 98 geschwenkt werden, so daß sich ein enger Kontakt zwischen dem Haltebolzen 74 und der Auskehlung ergibt, sobald der Lader 12 seine endgültige Befestigungslage einnimmt.

Ist der Lader 12 mit eingesetztem Befestigungsbolzen 126 montiert, so liegt die tiefstliegende Kante des hinteren Bereiches des unteren Mastständerendes 44 etwas über der Grundplatte 56, wie es am besten aus Fig. 11 und 12 hervorgeht. Der Befestigungsbolzen 126 und die äußere Buchse 90 enthalten jeweils eine Öffnung zur Aufnahme eines Haltestiftes 130, durch den der Befestigungsbolzen 126 während des Laderbetriebs in seiner Lage gehalten wird (Fig. 12).

Die oben beschriebene Ausbildung des unteren Mastständerendes 44 und des Anbaurahmens 42 liefern eine sehr enge und starke Befestigung für den Lader 12. Wie beispielsweise aus den Fig. 5 und 11 entnommen werden kann, werden die großen Momente, die während des Betriebs des Laders 12 auftreten, im wesentlichen durch den Anbaurahmen 42 und die Mastständerenden 44 aufgenommen, welche einen Hebel bilden (etwa gleich dem Abstand zwischen den Bolzen 74 und 126), der lediglich einen kleinen Bruchteil (z. B. weniger als etwa ein Fünftel) des Hebels darstellt, der sich aus dem Abstand zwischen dem Zusatzgerät 28 und der Seitenbefestigung 40 ergibt. Daher ist es offenkundig, daß jede durch ein Spiel hervorgerufene Bewegung der Befestigung sich beim Zusatzgerät stark vergrößernt auswirken würde. Die Führungs- und Fangtaschenanordnung vermindert das Spiel und liefert eine zwangsläufige Ausrichtung der Bohrungen 88 und 118 durch Anwendung der Laderhydraulik, so daß der Befestigungsbolzen 126 sich leicht einsetzen und entfernen läßt, ohne daß Unterlagen oder Einstellmittel erforderlich wären.

### Befestigen des Laders:

Der Schlepper 10 wird vorwärts zwischen die Mastständer 18 des Laders 12, der wie in Fig. 2 gezeigt aufgestellt ist, gefahren, bis die hinteren Maststeckhülsen 116 über den beidseitigen Anbaurahmen 42 liegen. Der Schlepper wird in dieser Position bei abgeschaltetem Motor abgestellt. Die mit den Zylindern 30, 34 verbundenen Hydraulikleitungen 132, 134 werden mit dem nicht dargestellten Hydrauliksystem des Schleppers 10 verbunden, so daß die Zylinder 30, 34 betätigt werden können. Der Schleppermotor wird gestartet und die Auslegerzylinder 30 werden ausgefahren, um die Mastständer 18 um die Stellen 23 zu verschwenken, bis die Auskehlungen 104 gerade über den zugehörigen Seitenbefestigungen 40 liegen (Fig. 3). Die Zusatzgerätezylinder 34 werden dann ausgefahren, wodurch sich der Lader 12 über die Fußpunkte seiner Abstellstützen 38 verkippt, so daß das Mastständerende 44 in den Anbaurahmen 42 eintaucht und durch die Seitenwände 84 in seine richtige Querlage geführt wird.

Ist das Mastständerende 44 erst einmal im Anbaurahmen 42, so wird das Mastständerende 44 durch Einfahren des Zylinders 30 (Fig. 4) vorwärts bewegt, und die Auskehlung 104 wird durch die Platten 72, 73 geführt über den Bolzen 74 geschoben. Die Zylinder 30 werden so lange eingefahren, bis die nach vorn offene Fangtasche 104 gegen den Bolzen 74 anliegt. Nimmt die Fangtasche 104 den Bolzen 74 vollständig auf, so werden die Zusatzgerätezylinder 34 ausgefahren (Fig. 5), wobei sich das Zusatzgerät 28 aus der horizontalen Ausrichtung nach unten bewegt. Die Auslegerzylinder 30 werden dann eingefahren, um die Vorderräder des Schleppers zu entlasten. Hierdurch wird auf den hinteren Bereich 114 des Mastständerendes 44 eine Kraft ausgeübt, durch die sich das Ende 114 um die Achse des Bolzens 74 nach unten dreht, bis die Maststeckhülsen 116 sich vollständig in die Führungsoberflächen 86 bewegt haben und satt in den Fangtaschen 98 sitzen. Bei abgestelltem Motor und Schlepper werden die Befestigungsbolzen 126 in die entsprechenden Buchsen 90 eingeführt und durch die Bohrungen 88, 118 gesteckt, um den Lader 12 am Schlepper 10 zu arretieren. Die Abstellstützen 38 werden angehoben und durch nicht gezeigte Stifte in ihrer angehobenen Stellung (Fig. 1) befestigt.

### Abstellen des Laders:

Soll der Schlepper 10 für andere Zwecke verwendet und vom Lader 12 befreit werden, so wird er zu einem ebenen Abstellplatz für den Lader 12 gefahren. Die Zylinder 34 werden ausgefahren, um das Zusatzgerät 28 in eine untere Kipplage, die gegenüber der Horizontalen ungefähr 45° beträgt, zu bringen. Die Zylinder 30 werden eingefahren, um das Zusatzgerät 28 auf den Boden abzusenken (Fig. 1) und die Vorderräder des Schleppers 10 zu entlasten, da das Gewicht des Anbaugeräts 12 die Auflage der Maststeckhülsen 116 in der entsprechenden Fangtasche 98 belastet (Fig. 11 und 12). Durch die Entlastung fluchten die Bohrungen 88 in den Buchsen 90 genau mit den Bohrungen 118 in den entsprechenden Maststeckhülsen 116. Bei abgestelltem Schlepper und Motor werden die Abstellstützen 38 gelöst und in ihre Abstellage verschwenkt und durch Stifte gesichert (Fig. 5). Die Befestigungsbolzen 126 werden dann gelöst und herausgenommen.

Der Schlepper wird gestartet und die Zusatzgerätezylinder 34 werden eingefahren, bis die Abstellstützen 38 sich ungefähr 30 mm über dem Boden befinden. Danach werden die Zylinder 30 ausgefahren (Fig. 4), bis die unteren Mastständerenden 44 sich um einen ausreichenden Abstand nach hinten bewegt haben, um die Auskehlungen 104 aus den Bolzen 74 zu ziehen. Die Zusatzgerätezylinder werden vollständig eingefahren (Fig. 3), um das untere Mastständerende 44 vollständig aus dem Anbaurahmen 42 anzuheben, wobei der Lader 12 sich um die Fußpunkte seiner Abstellstützen 38 verschwenkt. Dann werden die Zylinder 30 vollständig eingefahren. Bei abgestelltem Motor und Schlepper und bei druckentlastetem Hydrauliksystem werden die Hydraulikleitungen 132, 134 gelöst. Der Motor wird gestartet und der Schlepper wird langsam zurück aus dem Bereich der Mastständer 18 des Laders 12 gefahren. In seiner Abstellstellung ruht der Lader 12 auf seinen Abstellstützen 38 und dem Zusatzgerät 28.

Auch wenn die Erfindung lediglich an Hand eines Ausführungsbeispiels beschrieben wurde, erschließen sich für den Fachmann im Lichte der vorstehenden Beschreibung viele verschiedenartige Alternativen, Modifikationen und Varianten, die unter die vorliegende Erfindung fallen.

## Patentansprüche

1. Befestigungsvorrichtung zur Montage des unteren Endes eines zweier aufrechter Ladermastständer (18) an einem Arbeitsfahrzeug, insbesondere einem Schlepper (10), bestehend aus einem von zwei auf gegenüberliegenden Seiten des Arbeitsfahrzeuges angebrachten Anbaurahmen (42), die die gesamten Tragkräfte des Laders (12) aufnehmen können, einer Aufnahme, die sich auf einer in Längsrichtung des Arbeitsfahrzeuges liegenden Seite des unteren Mastständerendes (44) befindet und wenigstens einer Ausnehmung (118) auf der anderen in Längsrichtung des Arbeitsfahrzeuges liegenden Seite des Mastständerendes (44), die bei am Arbeitsfahrzeug montiertem Lader (12) mit wenigstens einer entsprechenden Ausnehmung (88) des Anbaurahmens (42) fluchtet, so daß in die Ausnehmungen (88, 118) wenigstens ein Befestigungsmittel (126) einsetzbar ist, mit am Anbaurahmen (42) im Bereich seiner Ausnehmung (88) angebrachten in Montagerichtung offenen Führungsmitteln, die der Aufnahme eines an die Führungsmittelkontur angepaßten Auflageteils (116) des Mastständerendes (44) dienen, wobei der Anbaurahmen (42) längs ausgerichtete, zueinander beabstandete Seitenwände (84) aufweist, dadurch gekennzeichnet, daß die Aufnahme ein hohlkehlförmiges Teil (104) enthält, das der Aufnahme eines an dem Anbaurahmen (42) befestigten Querbolzens (74), um den der Mastständer (18) verschwenkbar ist, dient, daß das Auflageteil zwei quer zur Längsrichtung ausgerichtete, über den Rahmen des Ladermastständers (18) hinausragende und miteinander fluchtende zylindrische Hülsen (116) enthält, deren Bohrungen (118) die genannten Ausnehmungen des Mastständerendes (44) sind, und daß die einander zugewandte Flächen der Seitenwände (84) mit in Montagerichtung trichterförmig zusammenlaufenden, abgeschrägten Führungsflächen (82, 83, 86, 94, 102) versehen sind, die in jeweils eine zugehörige Fangtasche (98) münden, welche bei am Arbeitsfahrzeug montiertem Ladermastständer (18) der Aufnahme des jeweiligen über den Rahmen des Ladermastständers hinausragenden Abschnitts der zylindrischen Hülsen (116) dient.

2. Befestigungsvorrichtung nach Anspruch 1, dadurch gekennzeichnet, daß die Fangtaschen eine zylinderförmige Oberfläche (98) zur Aufnahme eines zylinderförmigen Auflageteiles (116) aufweisen und daß jeder Anbaurahmen (42) zwei Seitenwände (84) aufweist, die je eine Buchse (90) tragen, deren Bohrung (88) die Ausnehmung des Anbaurahmens (42) darstellt und konzentrisch zur Zylinderfläche der Fangtasche (98) liegt.

3. Befestigungsvorrichtung nach Anspruch 2, dadurch gekennzeichnet, daß die Umfangsflächen der zylinderförmigen Auflageteile (116) und die Oberfläche der Fangtaschen (98) gleich große Radien aufweisen.

4. Befestigungsvorrichtung nach einem der Ansprüche 1 bis 3, dadurch gekennzeichnet, daß die Aufnahme auf der nach vorne, d. h. in Richtung eines an dem Ladermastständer (18) befestigten Zusatzgerätes (28), weisenden Seite des Mastständerendes (44) angeordnet und als im wesentlichen nach vorne offene Auskehlung (104) ausgebildet ist und daß der Querbolzen (74) auf der nach vorne weisenden Seite des Anbaurahmens (42) befestigt ist.

5. Befestigungsvorrichtung nach einem der Ansprüche 1 bis 4, dadurch gekennzeichnet, daß die Führungsmittel als auf den Anbaurahmen (42) befestigte Wände (84) mit abgeschrägten Bereichen (82, 83, 94) ausgebildet sind.

## Claims

1. An attachment device for mounting the lower end of one of two upright loader standards (18) on a working vehicle, especially a tractor (10), consisting of one of two attachment frames (42) fitted on opposite sides of the working vehicle and capable of taking the whole load of the loader (12), a receptacle which is located on one side of the lower standard end (44) lying in the longitudinal direction of the working vehicle, and at least one recess (118) on the other side of the end of the standard (44) lying in the longitudinal direction of the working vehicle and registering with at least one corresponding recess (88) of the attachment frame (42) with the loader (12) mounted on the vehicle, so that at least one fixing means (126) can be fitted in the recesses (88, 118), with guide means open in the mounting direction fitted on the attachment frame (42) in the region of its recess (88) and serving to receive a bearer part (116) of the standard end (44) matched to the contour of the guide means, wherein the attachment frame (42) has spaced sidewalls (84) directed lengthwise, characterized in that the receptacle includes a part (104) in the shape of a throat serving to receive a transverse pin (74) fixed to the attachment frame (42), the standard (18) being pivotal about the pin, in that the bearer part includes two cylindrical sleeves (116) aligned transversely to the longitudinal direction and in line with each other and projecting beyond the frame of the loader standard (18), the bores (118) of the sleeves being the said recesses of the standard end (44), and in that the mutually facing surfaces of the sidewalls (84) are provided with guide surfaces (82, 83, 86, 94, 102) which converge in funnel form in the mounting direction and are bevelled off, each of which opens into an associated catch pocket (98) which serves with the loader standard (18) mounted on the working vehicle to receive the corresponding section of the cylindrical sleeves projecting beyond the frame of the loader standard.

2. An attachment device according to claim 1, characterized in that the catch pockets have a cylindrical surface (98) for reception of a cylindrical bearer part (116) and in that each attachment frame (42) has two sidewalls (84) which each carry a bush (90) whose bore (88) represents the recess of the attachment frame (42) and is concentric with the cylindrical surface of the catch pocket (98).

3. An attachment device according to claim 2, characterized in that the peripheral surfaces of the cylindrical bearer part (116) and the surface of the catch pocket (98) have radii of the same size.

4. An attachment device according to any of claims 1 to 3, characterized in that the receptacle is arranged on the side of the standard end (44) facing forwards, i.e. in the direction of an auxiliary implement (28) fixed on the loader standard (18), and is formed substantially as a forwardly open throat (104) and in the transverse pin (74) is fixed on the forwardly pointing side of the attachment frame (42).

5. An attachment device according to any of claims 1 to 4, characterized in that the guide means are formed as walls (84) with bevelled off regions (82, 83, 94) fixed on the attachment frame (42).

## Revendications

1. Dispositif de fixation pour le montage de l'extrémité inférieure de l'un de deux montants verticaux (18) de support de flèche d'un chargeur frontal sur un engin de travail, notamment un tracteur (10), constitué par l'un de deux cadres de montage (42), qui sont disposés sur les côtés opposés de l'engin de travail et qui peuvent supporter la totalité des forces de support du chargeur frontal (12), par un logement, qui est situé sur un côté, qui s'étend dans la direction longitudinale de l'engin de travail, de l'extrémité inférieure (44) du montant de support de flèche, et par au moins un logement (118) situé sur l'autre côté, qui s'étend dans la direction longitudinale de l'engin de travail, de l'extrémité (44) du montant de support de flèche et qui, lorsque le chargeur frontal (12) est monté sur l'engin de travail, est aligné avec au moins un logement correspondant (88) du cadre de montage (42), de sorte qu'au moins un moyen de fixation (126) peut être inséré dans les logements (88,118), et comportant des moyens de guidage, qui sont disposés sur le cadre de montage (42) au niveau de son logement (88), sont ouverts dans la direction de montage et servent à loger une pièce d'appui (116), adaptée au contour des moyens de guidage, de l'extrémité (44) du montant de support de flèche, le cadre de montage (42) possédant des parois latérales longitudinales (84) distantes l'une de l'autre, caractérisé en ce que le logement contient une partie évidée en forme de rainure (104), qui sert à recevoir un boulon transversal (74), qui est fixé au cadre de montage (42) et autour duquel le montant de support de flèche (18) peut basculer, et que la pièce d'appui comporte deux douilles cylindriques (116) qui s'étendent transversalement par rapport à la direction longitudinale, font saillie audelà du cadre du montant de support de flèche (18) du chargeur frontal et sont alignées l'une sur l'autre et dont les perçages (118) constituent lesdits logements de l'extrémité (44) du montant de support de flèche, et que les surfaces, qui se font face, des parois latérales (84), sont pourvues de surfaces obliques de guidage (82,83,86,94, 102), qui convergent en forme de trémie dans la direction de montage et se terminent chacune respectivement dans une poche réceptrice associée (98), qui, lorsque le montant de support de flèche (18) du chargeur frontal est monté sur l'engin de travail, sert à loger la section respective des douilles cylindriques 76, qui fait saillie au-delà du cadre du montant de support de flèche du chargeur frontal.

2. Dispositif de fixation selon la revendication 1, caractérisé en ce que les poches réceptrices possèdent un surface cylindrique (98) servant à recevoir une pièce d'appui cylindrique (37), et que chaque cadre de montage (42) possède deux parois latérales (84), qui portent chacune un manchon (90), dont le perçage (88) représente le logement ménagé dans le cadre de montage (42) et est concentrique à la surface cylindrique de la poche réceptrice (98).

3. Dispositif de fixation selon la revendication 2, caractérisé en ce que les surfaces circonférentielles des pièces d'appui cylindriques (116) et les surfaces des poches réceptrices (98) possèdent des rayons identiques.

4. Dispositif de fixation selon l'une des revendications 1 à 3, caractérisé en ce que le logement est disposé sur le côté de l'extrémité (44) du montant de support de flèche, qui est dirigé vers l'avant, c'est-à-dire en direction d'un appareil auxiliaire (28) fixé au montant de support de flèche (18) du chargeur frontal, et est agencé sous la forme d'une rainure (104) ouverte vers l'avant, et que le boulon transversal (64) est fixé sur le côté, tourné vers l'avant, du cadre de montage (42).

5. Dispositif de fixation selon l'une des revendications 1 à 4, caractérisé en ce que les moyens de guidage sont agencés sous la forme de parois (84), fixées au cadre de montage (42) et possédant des parties obliques (82,83,94).
